Europäisches Patentamt

European Patent Office

Office européen des brevets

(19)

(11) Numéro de publication: **0 198 740**
**B1**

(12) # FASCICULE DE BREVET EUROPÉEN

(45) Date de publication du fascicule du brevet:
**31.08.88**

(51) Int. Cl.⁴: **B 60 T 13/24**

(21) Numéro de dépôt: **86400583.0**

(22) Date de dépôt: **19.03.86**

(54) **Clé butée pour plongeur de valve d'un servomoteur d'assistance au freinage, et servomoteur équipé d'une telle clé.**

(30) Priorité: **27.03.85 FR 8504555**

(43) Date de publication de la demande:
**22.10.86 Bulletin 86/43**

(45) Mention de la délivrance du brevet:
**31.08.88 Bulletin 88/35**

(84) Etats contractants désignés:
**DE GB IT**

(56) Documents cité:
**EP-A-0 101 658**
**DE-A-3 113 271**
**FR-A-2 551 710**
**US-A-3 688 647**

(73) Titulaire: **BENDIX France, 126, rue de Stalingrad,
F-93700 Drancy (FR)**

(72) Inventeur: **Pagot, Henry, 28 rue Pasteur, F-93430
Villetaneuse (FR)**

(74) Mandataire: **Le Moenner, Gabriel, Division
Technique Service Brevets Bendix Europe 126,
rue de Stalingrad, F-93700 Drancy (FR)**

## Description

La présente invention concerne les clés butée pour plongeur de valve de distribution d'un servomoteur d'assistance au freinage, typiquement du type à dépression, et un servomoteur épuiqué d'une telle clé, la clé étant destinée à être reçue dans une gorge radiale d'une partie de moyeu d'un piston d'assistance du servomoteur, la clé étant du type formée à partir d'une plaque métallique et comportant une partie de corps prolongée par une partie d'extrémité ayant une largeur transversale inférieure à la largeur transversale de la gorge et formée avec une découpe constituant deux bras d'extrémité, et des moyens de retenue sur la partie de corps destinés à coopérer avec au moins une paroi adjacente de la gorge radiale.

Une clé butée de ce type est décrite notamment dans le document EP-A-0 101 658, dont le contenu est supposé intégré ici pour référence.

Un souci constant avec ce type de clé butée est d'éviter que la clé ne puisse sortir intempestivement de la gorge du moyeu, notamment sous l'effet des vibrations importantes auxquelles ce type de matériel automobile est soumis. Dans le document EP-A-0 101 658, la clé comporte des bords latéraux rabattus engagés légèrement à force dans la gorge radiale, laquelle est pourvue en outre, dans sa face frontale avant, d'une saillie de retenue destinée à venir se loger dans une ouverture centrale de la partie de corps de la clé. Le document DE-A-3 113 271 décrit, par ailleurs, une clé traversant des ouvertures de faible épaisseur de la paroi périphérique de la partie de moyeu et d'une virole concentrique solidaire du piston d'assistance, la clé comportant des évidements latéraux dans sa partie extérieure destinés à coopérer avec des saillies en regard de l'ouverture de la partie de moyeu. Ces divers agencements nécessitent une conformation particulière de la partie de moyeu (généralement réalisée par moulage d'une seule pièce, et en obèrent les coûts de fabrication. D'autre part, compte tenu du matériau relativement tendre constitutif de la partie de moyeu, les saillies de retenue s'avèrent fréquemment endommagées lors de la mise en place de la clé puis, ultérieurement, lors de la mise en oeuvre du servomoteur sollicitant fréquemment la clé butée.

La présente invention a pour objet de proposer une clé butée de conception simple et robuste, ne nécessitant pas de conformation particulière de la partie de moyeu et assurant un effet de retenue par auto-verrouillage de la clé dans la gorge de la partie de moyeu.

Pour ce faire, selon une caractéristique de l'invention, la partie de corps de la clé butée comprend deux pattes élastiques s'étendant latéralement et angulairement dans la direction opposée à la partie d'extrémité formant les bras d'extrémité et terminées chacune par un angle vif, la distance transversale, au repos, entre les angles vifs étant supérieure à la largeur transversale de la gorge de la partie de moyeu.

Avec un tel agencement, lors de l'insertion de la clé dans la gorge, les pattes flexibles s'effacent en se contractant transversalement pour glisser le long des parois transversalement en vis à vis de la gorge jusqu'à ce que la clé adopte sa position finale de montage. Dans cette position, les angles vifs des pattes flexibles sont en appui incisif contre les parois latérales en regard de la gorge dans lesquelles ils pénètrent légèrement. Si la clé à tendance à sortir de la gorge, il en résulte un arc-boutement des pattes flexibles tendant à les écarter et à mordre plus profondément dans les parois de la gorge, garantissant ainsi le maintien de la clé dans cette dernière.

C'est ainsi un autre objet de la présente invention de proposer un servomoteur d'assistance au freinage conçu pour être équipé d'une telle clé, de conception simplifiée et de coûts de fabrication réduits.

Pour ce faire, selon une autre caractéristique de l'invention, dans un tel servomoteur, du type comportant un moyeu de piston d'assistance, dans lequel coulisse un plongeur de valve, et un clé butée pour ce plongeur engagée dans une gorge radiale du moyeu de piston contre une première paroi axiale plane de cette gorge, cette gorge présente, au droit de la clé butée, une largeur transversale sensiblement constante sur toute son extension radiale.

L'effet d'auto-verrouillage de la clé dans la gorge ayant tendance à solliciter cette clé radialement vers l'intérieur, dans la direction vers le plongeur, selon une autre caractéristique de l'invention, la gorge de la partie de moyeu comporte une surface de butée radiale intérieure pour au moins un des bras d'extrémité de la clé.

D'autres caractéristiques et avantages de la présente invention ressortiront de la description suivante de modes de réalisation, donnés à titre illustratif mais nullement limitatif, faite en relation avec les dessins annexés, sur lesquels:

- la Figure 1 est une vue partielle en coupe longitudinale d'un moyeu de servomoteur d'assistance équipé d'une clé butée selon l'invention ;
- la Figure 2 est une vue schématique en coupe transversale suivant le plan de coupe II-II de la Figure 1 et montrant un premier mode de réalisation d'une clé selon l'invention; et
- la Figure 3 est une vue en plan d'un second mode de réalisation d'une clé selon l'invention.

Dans la description qui va suivre et sur les dessins, les éléments identiques ou analogues portent les mêmes chiffres de référence.

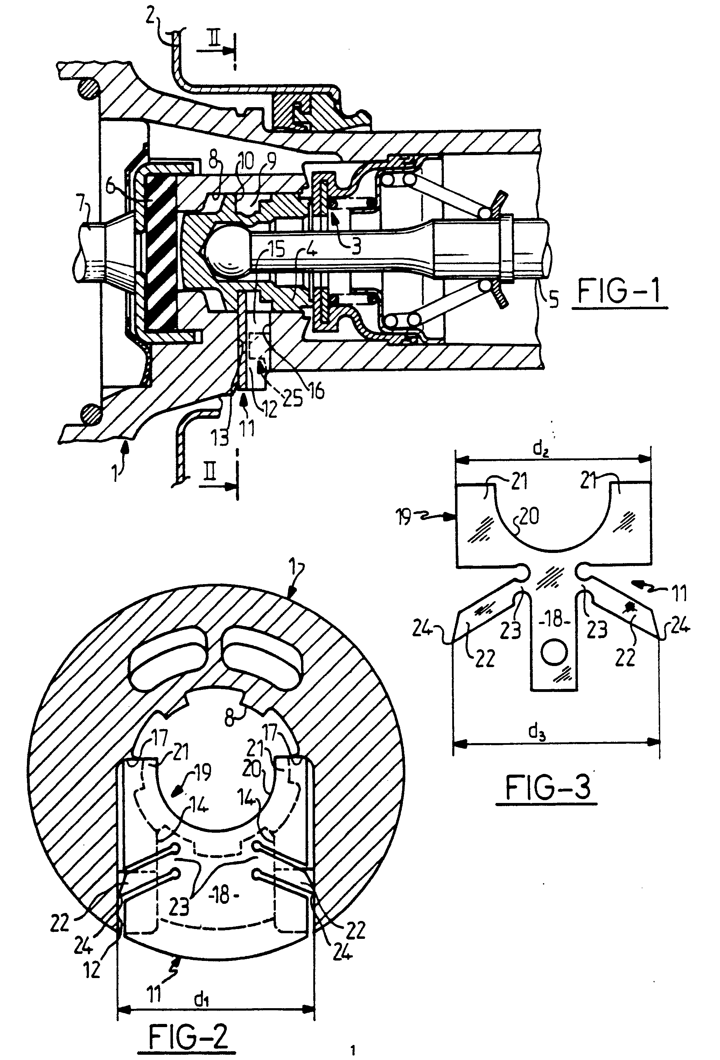

On reconnaît sur la Figure 1 la partie centrale d'un moyeu 1, réalisé typiquement en un matériau plastique tel que la bakélite, d'un piston d'assistance d'un servomoteur d'assistance dont on reconnaît une portion de la coquille arrière de boîtier 2. Dans la partie de moyeu 1 est disposé un moyen de valve de distribution à trois voies 3 associé à un plongeur de valve 4 solidaire de la tige d'entrée 5 du servomoteur et susceptible de coopérer avec un disque de réaction 6 monté dans une coupelle d'extrémité d'une tige de sortie 7 du servomoteur, destinée typiquement à être couplée à un piston d'un maître cylindre associé au servomoteur d'assistance. De façon classique, le plongeur 4 coulisse axialement dans un alésage central 8 du moyeu 1 et comporte une gorge annulaire périphérique 9 définissant une face d'appui annulaire 10 dirigée vers la tige d'entrée 5 et destinée à coopérer en appui avec une clé butée, désignée généralement par la référence 11, montée dans une gorge radiale 12 du moyeu 1. De façon plus spécifique, comme on le voit mieux sur la Figure 2, la gorge 12 est délimitée axialement, du côté de la tige de sortie 7, par une paroi frontale axiale plane 13 et est définie, au voisinage de cette paroi frontale 13 et au moins au voisinage de l'alésage 8, par deux rainures radiales parallèles en vis à vis 14, la gorge 12 comportant une portion centrale 15 d'extension axiale supérieure à l'extension axiale des rainures 14 et délimitée par une seconde paroi axiale 16 pour former un passage d'accès de fluide au moyen de valve 3. La largeur transversale $d_1$ de la gorge 12 est, au moins au voisinage de la paroi frontale 13, sensiblement constante sur toute son extension radiale, typiquement supérieure au diamètre de l'alésage 8 en formant ainsi, sensiblement au niveau d'un plan diamétral de cet alésage 8, des surfaces de butée radiale intérieures 17 pour la clé butée 11, comme on le verra plus avant.

La clé butée 11 présente une configuration entièrement plane et est réalisée par découpage à partir d'une plaque métallique d'une épaisseur d'environ 1,5 mm, par exemple en acier traité. La clé 11 comporte une partie de corps 18 terminée par une partie d'extrémité 19 formée centralement avec une découpe semi-circulaire 20 de diamètre supérieur au diamètre interne de la gorge 9, de façon à constituer ainsi deux bras d'extrémité 21, coopérant avec la face d'appui annulaire 10 du plongeur 4. La largeur transversale $d_2$ de ta partie d'extrémité 19 est inférieure à la largeur transversale $d_1$ de la gorge 12.

Selon un aspect de l'invention, la partie de corps 18 de la clé 11 est formée, par découpe du matériau consitutif de la clé, avec deux pattes flexibles 22 s'étendant symétriquement latéralement et angulairement dans la direction opposée à la partie d'extrémité 19 à partir de zones de raccordement 23 avec une zone centrale de la partie de corps 18 présentant une section réduite assurant aux pattes 22 la flexibilité requise dans le plan de la clé. Les pattes 22 se terminent chacune, à l'opposé de la partie d'extrémité 19, par un angle vif 24, la distance transversale $d_3$ entre ces angles vifs étant, au repos, supérieure, par exemple de 1 à 2 mm, à la largeur transversale d, de la gorge radiale 12. Comme on le voit sur la Figure 2, la clé 11 est engagée dans la gorge 12, sensiblement sans jeu axial entre la partie d'extrémité 19 et les rainures 14 , jusqu'à ce que les extrémités des bras 21 viennent porter contre les surfaces de butée radiale 17, les pattes flexibles 24 coulissant se faisant, à l'état contracté, contre les parois en vis à vis de la gorge 12. Dans la position de montage finale représentée sur la Figure 2, les angles vifs 24 des pattes 22 portent en appui incisif contre les parois transversales de la gorge 12 pour assurer l'effet "harpon" de retenue susmentionné.

Dans le mode de réalisation de la Figure 2, la partie de corps 18 (à l'exception des pattes 22) présente une configuration massive avec une largeur transversale sensiblement égale à la largeur $d_2$ de la partie d'extrémité 19. On peut toutefois prévoir, dans la portion centrale d'extension axiale supérieure 15 de la gorge 12 une partie en saillie 25 s'étendant axialement depuis la seconde paroi frontale axiale 16 vers la première paroi frontale axiale 13 jusqu'au voisinage immédiat de la clé 11. Dans ces conditions, la partie de corps 18 de la clé 11 peut présenter une largeur réduite comme représenté sur la Figure 3.

## Revendications

1. Clé butée pour plongeur (4) de valve de distribution (3) d'un servomoteur d'assistance au freinage, la clé étant destinée à être reçue dans une gorge radiale (12) d'une partie de moyeu de piston d'assistance (1) du servomoteur, la clé (11) étant formée à partir d'une plaque métallique et comportant une partie de corps (18), une partie d'extrémité (19) ayant une largeur transversale ($d_2$) inférieure à la largeur transversale ($d_1$) de la gorge radiale (12) et formée avec une découpe (20) constituant deux bras d'extrémité (21), et des moyens de retenue sur la partie de corps (18) destinés à coopérer avec au moins une paroi adjacente de la gorge radiale, caractérisée en ce que la partie de corps (18) de la clé (11) comprend deux pattes flexibles (22) s'étendant latéralement et angulairement dans la direction opposée à ladite partie d'extrémité (19) et terminées chacune par un angle vif (24), la distance transversale ($d_3$), au repos, entre les angles (24) étant supérieure à ladite largeur transversale ($d_1$) de la gorge radiale (12).

2. Clé butée selon la revendication 1, caractérisée en ce que les pattes flexibles (22) sont délimitées chacune par deux découpes ménagées dans la partie de corps (18) et sont raccordées chacune à une zone centrale de cette partie de corps par une zone de liaison amincie (23).

3. Clé butée selon la revendication 1 ou la revendication 2, caractérisée en ce que la clé (11) est entièrement plane.

4. Servomoteur d'assistance au freinage, comprenant, dans une partie de moyeu de piston d'assistance (1), un plongeur (4) de valve de distribution (3) et une clé butée (11) pour le plongeur selon l'une des revendications précédentes, engagée dans une gorge radiale (12) de la partie de moyeu de piston (1) contre une première paroi axiale plane (13) de cette gorge radiale, caractérisé en ce que la gorge radiale (12) présente, au droit de la clé (11), une largeur transversale ($d_1$) sensiblement constante sur toute son extension radiale.

5. Servomoteur selon la revendication 4, caractérisé en ce que la gorge (12) comporte une surface de butée radiale intérieure (17) pour au moins un des bras d'extrémité (21) de la clé (11).

6. Servomoteur selon la revendication 4 ou la revendication 5, caractérisé en ce que la gorge (12) comprend, au moins au voisinage du plongeur (4), deux rainures radiales parallèles en vis à vis (14) délimitées axialement, d'un côté, par ladite paroi axiale (13) de la gorge et recevant sensiblement sans jeu axial la partie d'extrémité (19) de la clé.

7. Servomoteur selon la revendication 6, caractérisé en ce que la gorge (12) comporte une portion centrale (15) d'extension axiale supérieure à l'extension axiale des rainures (14) et délimitée par une seconde paroi axiale (16), une partie en saillie (25) de la partie de moyeu (1) s'étendant axialement à partir de cette seconde paroi axiale (16) jusqu'au voisinage de la première paroi axiale (13).

**Patentansprüche**

1. Anschlagteil für den Plunger (4) des Verteilerventils (3) eines Bremskraftverstärkers, wobei das Anschlagteil in einer radialen Nut (12) eines Abschnitts der Habe des Verstärkerkolbens (1) des Bremskraftverstärkers angeordnet ist, das Anschlagteil (11) aus einer metallischen Platte hergestellt ist und einen Körperabschnitt (18), einen Endabschnitt (19) und Haltemittel am Körperabschnitt (18) aufweist, von denen der Endabschnitt (19) in Querrichtung eine Breite ($d_2$) hat, die kleiner ist als die Breite ($d_1$) der radialen Nut (12), und mit einer Ausnehmung (20) versehen ist, die zwei Arme (21) bildet, und die Haltemittel mit mindestens einer Wand angrenzend an der radialen Nut zusammenwirken, dadurch gekennzeichnet, daß der Körperabschnitt (18) des Anschlagteils (11) zwei flexible Ansätze (22) aufweist, die sich seitlich und unter einem Winkel in der von dem Endabschnitt (19) abgewandten Richtung erstrecken und jeweils in einem spitzen Winkel (24) enden, wobei der in Querrichtung liegende Abstand ($d_3$) zwischen den Winkeln (24) in der Ruhestellung größer ist als die Breite ($d_1$) der radialen Nut (12).

2. Anschlagteil nach Anspruch 1, dadurch gekennzeichnet, daß die flexiblen Ansätze (22) jeweils von zwei im Körperabschnitt (18) gebildeten Ausschnitten begrenzt und jeweils mit einem zentralen Bereich des Körperabschnitts durch einen dünneren Verbindungsbereich (23) verbunden sind.

3. Anschlagteil nach Anspruch 1 oder 2, dadurch gekennzeichnet, daß das Anschlagteil (11) insgesamt eben ist.

4. Bremskraftverstärker mit einem in einem Nabenabschnitt des Verstärkerkolbens (1) gebildeten Plunger (4) eines Verteilerventils (3) und einem Anschlagteil (11) für den Plunger nach einem der vorhergehenden Ansprüche, welches in einer radialen Nut (12) des Nabenabschnitts des Kolbens (1) in Anlage an einer ebenen axialen ersten Wand (13) der radialen Nut angeordnet ist, dadurch gekennzeichnet, daß die radiale Nut (12) an der Stelle des Anschlagteils (11) eine im wesentlichen konstante Breite ($d_1$) über ihrer gesamten radialen Länge besitzt.

5. Bremskraftvestärker nach Anspruch 4, dadurch gekennzeichnet, daß die Nut (12) eine innere radiale Anschlagsfläche (17) für mindestens einen der Arme (21) des Anschlags teils (11) aufweist.

6. Bremskraftverstärker nach Anspruch 4 oder 5, dadurch gekennzeichnet, daß die Nut (12) zumindest in der Nähe des Plungers (4) zwei gegenüberliegende parallele radiale Ausnehmungen (14) aufweist, die axial auf einer Seite von der besagten axialen Wand (13) der Nut begrenzt sind und im wesentlichen ohne axiales Spiel den Endabschnitt (19) des Anschlagteils aufnehmen.

7. Bremskraftverstärker nach Anspruch 6, dadurch gekennzeichnet, daß die Nut (12) einen zentralen Abschnitt (15) besitzt, dessen axiale Abmessung größer ist als die axiale Abmessung der Ausnehmungen (14) und der von einer zweiten axialen Wand (16) begrenzt ist, wobei ein vorstehender Abschnitt (25) des Nabenabschnitts (1) ausgehend von dieser zweiten axialen Wand (16) axial bis in die Nähe der zweiten axialen Wand (13) verläuft.

**Claims**

1. Abutment key for plunger (4) of the distribution valve (3) of a braking assistance servomotor, the key being intended to be housed in a radial slot (12) in an assistance piston hub portion (1) of the servomotor, the key (11) being formed from a metal plate and comprising a body portion (18), an end portion (19) having a transverse width ($d_2$) which is less than the transverse width ($d_1$) of the radial slot (12) and shaped with a cut-out (20) forming two end arms (21), and retaining means on the body portion (18) intended for cooperation with at least one adjacent wall of the radial slot, characterized in that the body portion (18) of the key (11) has two flexible fingers (22) which extend laterally and angularly in the direction away from the said end portion (19) and both terminate in a sharp angle (24), the transverse distance ($d_3$), at rest,

between the angles (24) being greater than the said transverse width ($d_1$) of the radial slot (12).

2. Abutment key according to Claim 1, characterized in that the flexible fingers (22) are each bounded by two slots in the body portion (18) and are each joined to a central zone of this body portion by a connecting zone of reduced width (23).

3. Abutment key according to Claim 1 or Claim 2, characterized in that the key (11) is completely flat.

4. Braking assistance servomotor comprising, in a hub portion (1) of an assistance piston, a plunger (4) of distribution valve (3) and an abutment key (11) for the plunger according to any of the preceding claims, engaged in a radial slot (12) of the piston hub portion (1) against a first axial flat wall (13) of this radial slot, characterized in that the radial slot (12) has, in line with the key (11), a transverse width ($d_1$) which is essentially constant over its full radial length.

5. Servomotor according to Claim 4, characterized in that the slot (12) comprises an internal radial abutment surface (17) for at least one of the end arms (21) of the key (11).

6. Servomotor according to Claim 4 or Claim 5, characterized in that the slot (12) comprises, at least in the region of the plunger (4), two facing radial parallel grooves (14) which are bounded axially on one side by the said axial wall (13) of the slot and which receive the end portion (19) of the key essentially without axial play.

7. Servomotor according to Claim 6, characterized in that the slot (12) comprises a central portion (15) having an axial length greater than the axial length of the grooves (14) and which is bounded by a second axial wall (16), a projecting portion (25) of the hub portion (1) extending axially from this second axial wall (16) towards the region of the first axial wall (13).

FIG-1

FIG-2

FIG-3